# EUROPEAN PATENT APPLICATION

(11) **EP 4 779 818 A1**
(43) Date of publication of application: **22.07.2026**
(21) Application number: 26151219.8
(22) Date of filing: 12.01.2026
(51) Int. Cl.: H01R 43/28, H01B 7/08, H01B 7/40, H01B 13/00

(54) **WIRE HARNESS AND METHOD OF MANUFACTURING WIRE HARNESS**

(30) Priority: 15.01.2025 JP 2025005296
(71) Applicant: Yazaki Corporation, Tokyo 108-0075 (JP)
(72) Inventor: IMOU, Kenichi, Makinohara-shi, Shizuoka, 421-0407 (JP); KIMURA, Syuji, Makinohara-shi, Shizuoka, 421-0407 (JP); IIZUKA, Hidetoshi, Makinohara-shi, Shizuoka, 421-0407 (JP); FURUTA, Taku, Makinohara-shi, Shizuoka, 421-0407 (JP); SHIMOCHI, Eiji, Susono-shi, Shizuoka, 410-1194 (JP); KONNDOU, Hiroki, Susono-shi, Shizuoka, 410-1194 (JP)
(74) Representative: Hoffmann Eitle

(57) **Abstract**

A wire harness (WH) includes: a plurality of electric wires (10); a joint (20) that joins a plurality of electric wires (10) adjacent along a width direction (Y) to each other and joins a plurality of electric wires (10) adjacent along a stacking direction (Z) to each other; a terminal (30) provided at an end (10a) in the axial direction (X) of at least one of the plurality of electric wires (10); and a connector (40) including a cavity (42), in which the plurality of electric wires (10) is allowed to be separated from each other by tearing off the joint (20), and the terminal (30) is attached to the end (10a) and inserted into the cavity (42) of the connector (40) with at least one of the plurality of electric wires (10) being separated on a side of the end (10a) in the axial direction (X).

## Description

### BACKGROUND OF THE INVENTION

### 1. Field of the Invention

The present invention relates to a wire harness and a method of manufacturing the wire harness.

### 2. Description of the Related Art

For example, JP 2018 - 137 208 A discloses a wire harness as a technique related to a conventional wire harness. The wire harness includes a sheet-shaped functional exterior member and a plurality of electric wires arranged so as to overlap the functional exterior member in at least a partial region along a longitudinal direction. In JP 2018 - 137 208 A, at least a part of a portion where insulating coatings of the plurality of electric wires overlap the functional exterior member is welded.

Incidentally, for example, although the above-described conventional wire harness can hold the plurality of electric wires with the functional exterior member, the wire harness has room for further improvement in improving workability of installation work.

### SUMMARY OF THE INVENTION

The present invention has been made in view of the above-described circumstances, and an object thereof is to provide a wire harness and a method of manufacturing the wire harness capable of improving workability of installation work.

In order to achieve the above mentioned object, a wire harness according to one aspect of the present invention includes a plurality of electric wires each extending along an axial direction, aligned along a width direction intersecting with the axial direction, and aligned in a multi-layered manner along a stacking direction intersecting with the axial direction and the width direction; a joint including: a first joint that joins a plurality of electric wires adjacent along the width direction to each other; and a second joint that joins a plurality of electric wires adjacent along the stacking direction to each other; a terminal provided at an end in the axial direction of at least one of the plurality of electric wires; and a connector including a cavity that accommodates and holds the terminal, wherein the plurality of electric wires is allowed to be separated from each other by tearing off the joint, and the terminal is attached to the end and inserted into the cavity of the connector with at least one of the plurality of electric wires being separated on a side of the end in the axial direction.

In order to achieve the above mentioned object, a method of manufacturing the wire harness according to another aspect of the present invention includes an electric-wire first separation step of separating a plurality of electric wires along a stacking direction into a plurality of electric-wire layers by tearing off a second joint, performed on the plurality of electric wires in a state in which the plurality of electric wires each extending along an axial direction is aligned along a width direction intersecting with the axial direction and aligned in a multi-layered manner along the stacking direction intersecting with the axial direction and the width direction, a first joint joins a plurality of electric wires adjacent along the width direction to each other, and a second joint joins a plurality of electric wires adjacent along the stacking direction to each other; an electric-wire second separation step of separating, on a side of an end in the axial direction, at least one of the plurality of electric wires aligned along the width direction, which constitute the electric-wire layers, by tearing off the first joint of the electric-wire layers obtained by separation in the electric-wire first separation step; a terminal attaching step of attaching a terminal to the end in the axial direction of at least one of the plurality of electric wires separated in the electric-wire second separation step; and a terminal accommodating step of inserting the terminal attached in the terminal attaching step into a cavity of a connector.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is an exemplary perspective view of a wire harness according to an embodiment;
FIG. 2 is an exemplary perspective view of a stacked-electric-wire assembly of the wire harness according to the embodiment;
FIG. 3 is an exemplary cross-sectional view of the stacked-electric-wire assembly of the wire harness according to the embodiment;
FIG. 4 is an exemplary flowchart of a method of manufacturing the wire harness according to the embodiment;
FIG. 5 is an exemplary perspective view illustrating an electric-wire first separation step of the method of manufacturing the wire harness according to the embodiment;
FIG. 6 is an exemplary perspective view illustrating an electric-wire second separation step of the method of manufacturing the wire harness according to the embodiment;
FIG. 7 is an exemplary perspective view illustrating an electric-wire peeling step of the method of manufacturing the wire harness according to the embodiment;
FIG. 8 is an exemplary perspective view illustrating a terminal attaching step of the method of manufacturing the wire harness according to the embodiment;
FIG. 9 is an exemplary perspective view illustrating a terminal accommodating step of the method of manufacturing the wire harness according to the embodiment;
FIG. 10 is an exemplary perspective view of a stacked-electric-wire assembly of a wire harness according to a first variation;
FIG. 11 is an exemplary perspective view of a stacked-electric-wire assembly of a wire harness according to a second variation; and
FIG. 12 is an exemplary perspective view of a stacked-electric-wire assembly of a wire harness according to a third variation.

### DETAILED DESCRIPTION OF THE PREFERRED EMBODIMENTS

An embodiment and variations according to the present invention will be described in detail below with reference to the drawings. Note that the invention is not limited by the embodiment and the variations below. Furthermore, components in the embodiment and the variations below include those that can be easily replaced by a skilled person and those that are substantially the same.

Furthermore, the embodiment and the variations disclosed below include similar components. Therefore, in the following description, common reference signs are given to these similar components, and redundant description is omitted. Note that, in the present specification, ordinal numbers are used only to distinguish components, members, parts, positions, directions, and the like, and do not indicate order or priority.

### Embodiment

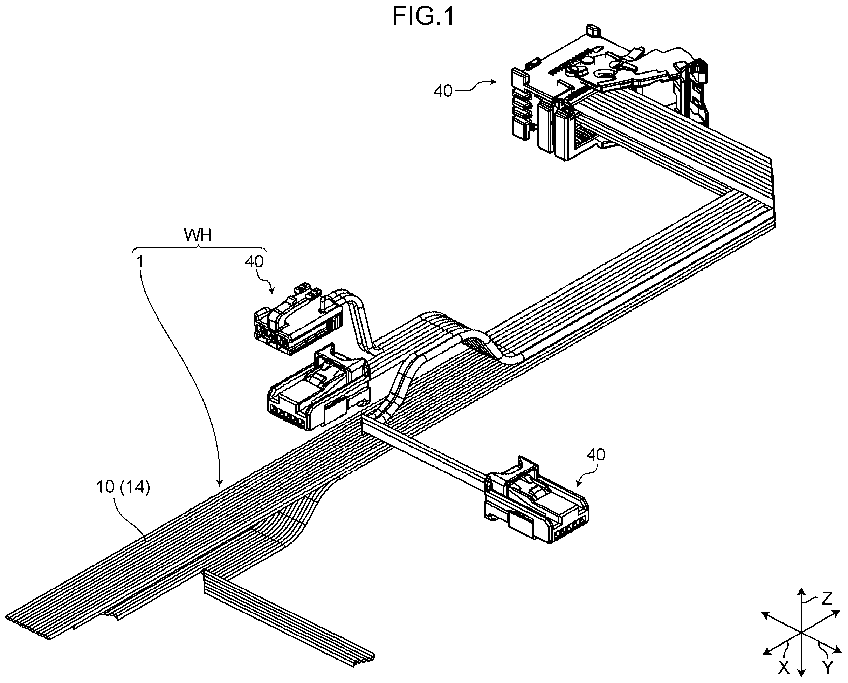

FIG. 1 is a perspective view of a wire harness WH according to an embodiment. The wire harness WH of the embodiment in FIG. 1 is incorporated in a vehicle such as an automobile. Here, for example, the wire harness WH is used to connect devices mounted on the vehicle with each other. A plurality of electric wires 10 used for power supply and signal communication is bundled up to form a collective component. The plurality of electric wires 10 is connected to the devices by connectors 40 and the like. The wire harness WH of the embodiment includes a stacked-electric-wire assembly 1 and a plurality of connectors 40. The stacked-electric-wire assembly 1 is a collective body of the plurality of conductive electric wires 10. The plurality of connectors 40 is provided at terminals of the stacked-electric-wire assembly 1. Note that, in addition, the wire harness WH may further include various components such as a fixture, a protector, and a grommet.

Note that, in the description, a first direction, a second direction, and a third direction intersect with each other. The first direction is referred to as an "axial direction X". The second direction is referred to as a "width direction Y". The third direction is referred to as a "stacking direction Z". Here, the axial direction X, the width direction Y, and the stacking direction Z are substantially orthogonal to each other. The axial direction X typically corresponds to, for example, the extending direction of the plurality of electric wires 10 and the longitudinal directions of the stacked-electric-wire assembly 1 and the wire harness WH. The width direction Y typically corresponds to, for example, the width directions of the stacked-electric-wire assembly 1 and the wire harness WH. The stacking direction Z typically corresponds to, for example, the height directions (vertical direction) of the stacked-electric-wire assembly 1 and the wire harness WH and the stacking direction of the plurality of electric wires 10. Note that, unless otherwise stated, the directions will be described below as directions with the stacked-electric-wire assembly 1 and the wire harness WH being installed to the vehicle.

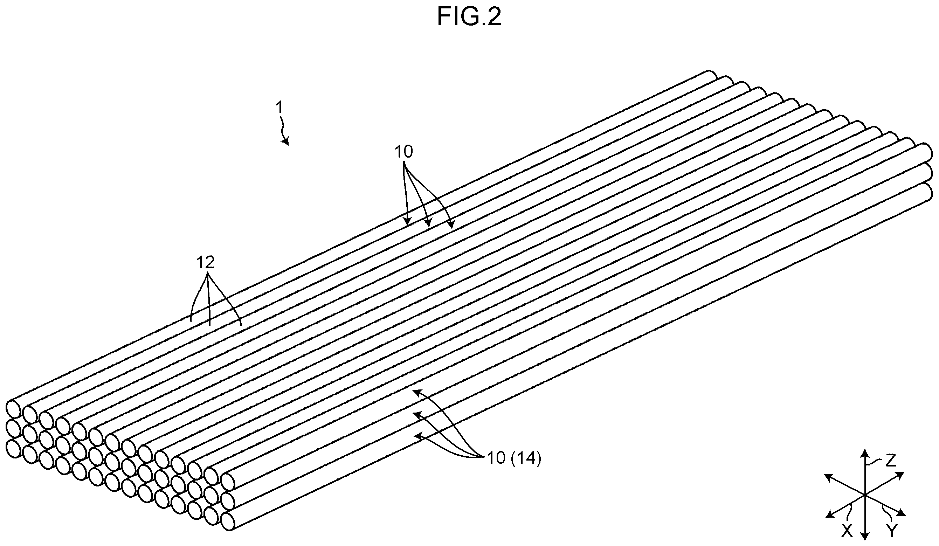

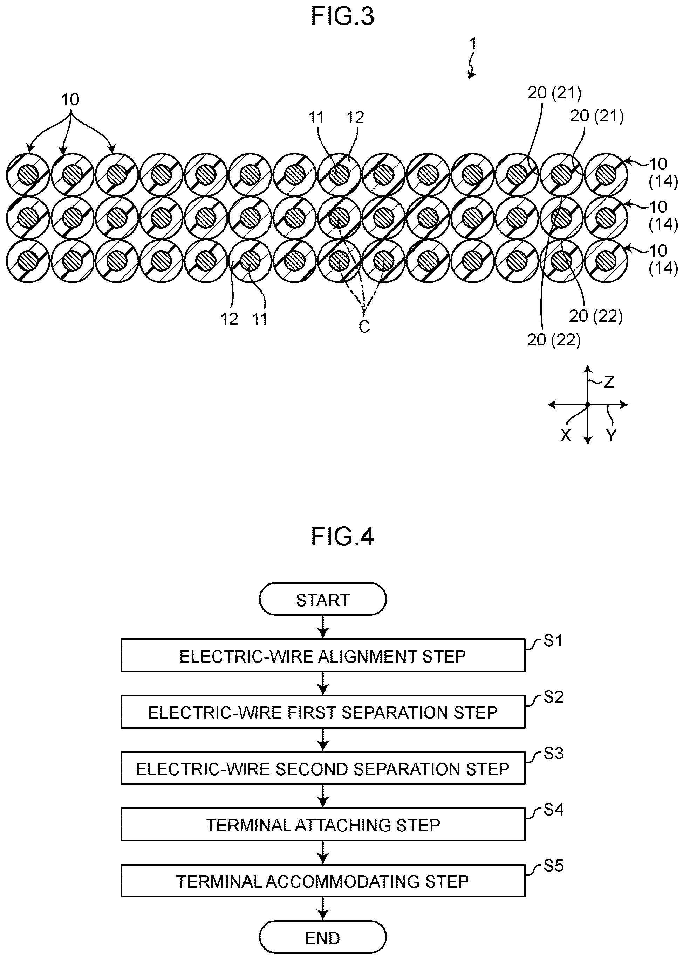

FIG. 2 is a perspective view of the stacked-electric-wire assembly 1 of the wire harness WH. FIG. 3 is a cross-sectional view of the stacked-electric-wire assembly 1. As illustrated in FIGS. 2 and 3, the stacked-electric-wire assembly 1 includes, for example, the plurality of electric wires 10 and joints 20. Each of the plurality of electric wires 10 includes a conductor portion 11 and an insulating coating 12. The conductor portion 11 has a linear shape and conductivity. The insulating coating 12 coats the outside of the conductor portion 11, and has insulation. The electric wires 10 are insulating electric wires obtained by coating the conductor portions 11 with the insulating coatings 12. Note that, although the conductor portion 11 of the embodiment is a core wire obtained by bundling up a plurality of conductive metal element wires, the conductor portion 11 may be, for example, a twisted core wire obtained by twisting the plurality of metal element wires.

The plurality of electric wires 10 is separated from each other. Each of the plurality of electric wires 10 linearly extends along the axial direction X. The plurality of electric wires 10 extends in the axial direction X (extending direction) with substantially the same diameter. Furthermore, in the plurality of electric wires 10, for example, the conductor portion 11 has a substantially circular cross-sectional shape (cross-sectional shape intersecting with axial direction X), and the insulating coating 12 has a substantially annular cross-sectional shape. As a whole, the plurality of electric wires 10 has a substantially circular cross-sectional shape. The insulating coating 12 is an electric-wire coating that coats the outer peripheral side of the conductor portion 11. The insulating coating 12 is formed by extruding an insulating resin material or the like, for example.

Here, in the embodiment, the plurality of electric wires 10 is aligned along the width direction Y, and aligned in a multi-layered manner along the stacking direction Z. Specifically, in the embodiment, for example, three (three lines of) electric-wire layers 14 are stacked along the stacking direction Z. Each of the electric-wire layers 14 includes 14 electric wires 10 provided in line along the width direction Y. Note that the number of the plurality of electric wires 10, that is, the number (layer number) of a plurality of electric-wire layers 14 stacked along the stacking direction Z and the number of a plurality of electric wires 10 provided in line along the width direction Y, which constitute each of the electric-wire layers 14, are not limited to that in this example. Various modification can be made.

Then, in the embodiment, the plurality of electric wires 10 is arranged in a matrix such that center portions C thereof overlap each other along the width direction Y and the stacking direction Z. That is, in the plurality of electric wires 10, the center portions C thereof are provided on a straight line along the width direction Y, and provided on a straight line along the stacking direction Z. This can reduce contacts between the plurality of electric wires 10 adjacent along the width direction Y and the stacking direction Z as compared to a case where the electric wires 10 of the plurality of electric-wire layers 14 are alternately arranged in a staggered manner. As a result, for example, the plurality of electric wires 10 joined to each other by the joints 20 to be described later can be easily torn off from each other.

The joints 20 include, for example, first joints 21 and second joints 22. The first joint 21 joins the plurality of electric wires 10 adjacent along the width direction Y to each other. The second joint 22 joins the plurality of electric wires 10 adjacent along the stacking direction Z to each other. In the embodiment, a first joint 21 and a second joint 22 include, for example, a bonding portion or a welding portion. The bonding portion bonds insulating coatings 12 of a plurality of electric wires 10 to each other with a bonding material. The welding portion joins insulating coatings 12 of a plurality of electric wires 10 to each other by thermal welding.

In the embodiment, for example, when the first joint 21 and the second joint 22 include a bonding portion, a bonding agent is applied to one end in the stacking direction Z and one end in the width direction Y of an electric wire 10, and other adjacent electric wires 10 are overlaid on the electric wire 10 in this state. These electric wires 10 can thereby be joined to each other. Furthermore, when the first joint 21 and the second joint 22 include a welding portion, for example, heat is applied between two electric wires 10 adjacent along the stacking direction Z and between two electric wires 10 adjacent along the width direction Y, and insulating coatings 12 are welded to each other. These electric wires 10 can thereby be joined to each other.

Note that, in the embodiment, in a state in which the first joints 21 and the second joints 22 of the joints 20 join a plurality of electric wires 10 to each other, gaps between the plurality of electric wires 10 are slightly filled with a bonding agent, thermally welded insulating coatings 12, and the like, and the plurality of electric wires 10 is slightly in line contact or surface contact with each other. That is, the first joints 21 and the second joints 22 join the plurality of electric wires 10 to each other at a predetermined joint strength in a state in which the plurality of electric wires 10 is relatively easily torn off.

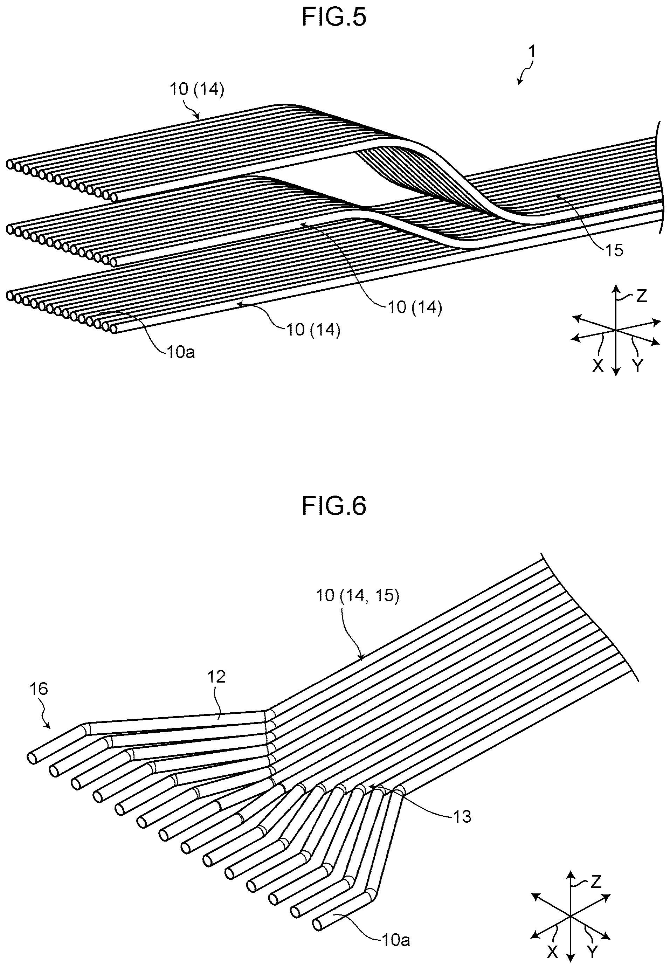

Furthermore, although the first joints 21 and the second joints 22 may be continuously provided over the entire lengths of the plurality of electric wires 10 in the axial direction X, for example, the first joints 21 and the second joints 22 may be intermittently provided along the axial direction X. This enables the plurality of electric wires 10 to be easily torn off from each other. In particular, a region (slit) in which a first joint 21 and a second joint 22 are not provided is formed at an end 10a (see FIG. 5) of the plurality of electric wires 10 in the axial direction X. The plurality of electric wires 10 can be easily torn off into a plurality of layered electric-wire layers 14, and each of the electric wires 10 of the electric-wire layers 14 can be easily torn off along the width direction Y.

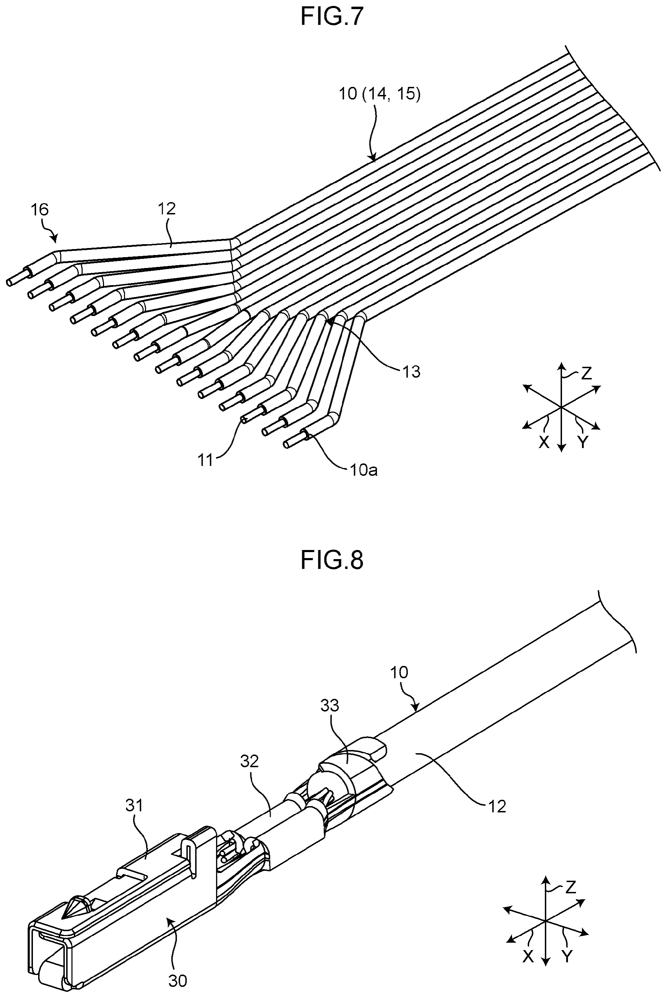

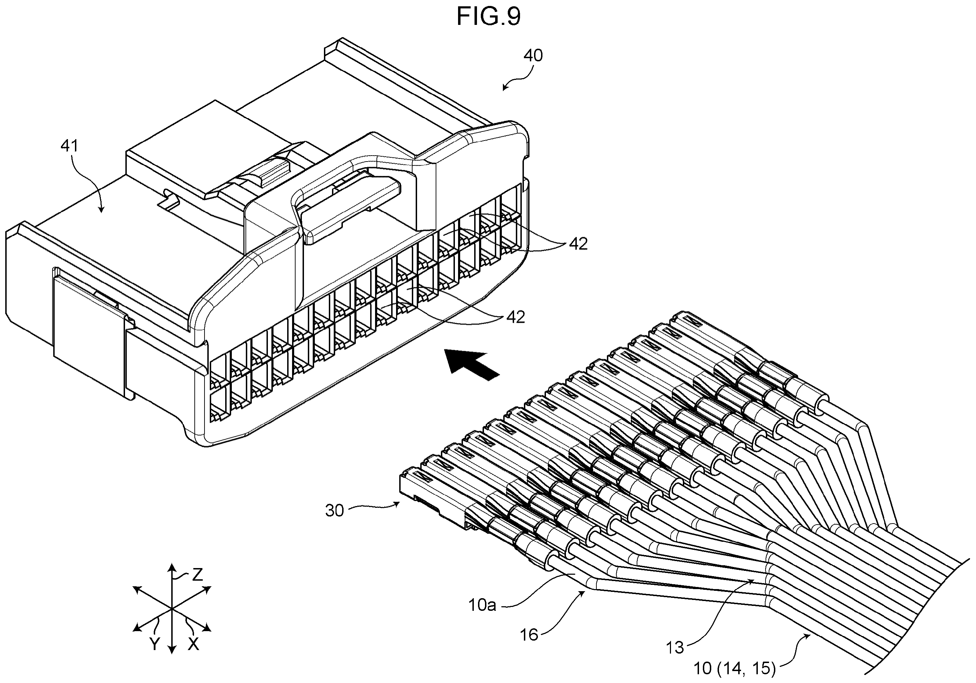

Next, the wire harness WH will be described. The stacked-electric-wire assembly 1 having the above-described configuration is applied to the wire harness WH. For example, the wire harness WH includes the above-described stacked-electric-wire assembly 1, terminals 30 (see FIG. 8), and the connectors 40 (see FIG. 9). A terminal 30 is crimped and fixed to a conductor portion 11 exposed from an insulating coating 12 by an electric-wire peeling step (see FIG. 7) to be described later. The terminal 30 includes, for example, an electrically connected portion 31, a conductor joint 32, and a coating joint 33. The electrically connected portion 31 is electrically connected to a counterpart terminal of a counterpart connector. The electrically connected portion 31 includes, for example, a terminal inserted portion into which the counterpart terminal is inserted along the axial direction X.

The coating joint 33 is a portion provided at an end opposite to the electrically connected portion 31 in the axial direction X and joined to the insulating coating 12 of the electric wire 10. The coating joint 33 is joined to the insulating coating 12 of the electric wire 10 by crimping, for example. The conductor joint 32 is a portion provided between the electrically connected portion 31 and the coating joint 33 in the axial direction X and joined to the conductor portion 11 of the electric wire 10. The conductor joint 32 is joined to the conductor portion 11 of the electric wire 10 by crimping, for example. Note that methods of joining the conductor joint 32 and the coating joint 33 are not limited to those in this example. For example, the conductor joint 32 and the coating joint 33 may be joined to the conductor portion 11 and the insulating coating 12 of the electric wire 10 by laser welding, ultrasonic joining, thermal welding, and the like.

A connector 40 (see FIG. 9) is fitted and connected to the counterpart connector (not illustrated). The connector 40 includes, for example, the plurality of terminals 30 and a housing 41. The housing 41 accommodates and holds the plurality of terminals 30 therein. The housing 41 has a plurality of cavities 42 into which the plurality of terminals 30 is inserted along the axial direction X. The plurality of cavities 42 is aligned along the width direction Y and the stacking direction Z in the housing 41. Specifically, in the embodiment, two lines (two layers) of cavities 42 are provided along the stacking direction Z. In each of the two lines (two layers), 15 cavities 42 are aligned along the width direction Y. Furthermore, the plurality of cavities 42 are separated from each other along the width direction Y and the stacking direction Z.

Next, an example of a method of manufacturing the wire harness WH will be described. The wire harness WH includes the stacked-electric-wire assembly 1 of the embodiment having the above-described configuration. FIG. 4 is a flowchart of the method of manufacturing the wire harness WH. FIG. 5 is a perspective view illustrating an electric-wire first separation step S2 of the method of manufacturing the wire harness WH. FIG. 6 is a perspective view illustrating an electric-wire second separation step S3 of the method of manufacturing the wire harness WH. Furthermore, FIG. 7 is a perspective view illustrating the electric-wire peeling step of the method of manufacturing the wire harness WH. FIG. 8 is a perspective view illustrating a terminal attaching step S4 of the wire harness WH. FIG. 9 is a perspective view illustrating a terminal accommodating step S5 of the method of manufacturing the wire harness WH.

As illustrated in FIGS. 3 and 4, first, in an electric-wire alignment step S1, a plurality of electric wires 10 is aligned along the width direction Y, and is aligned in a multi-layered manner along the stacking direction Z. In the state, the first joints 21 join the plurality of electric wires 10 adjacent along the width direction Y to each other. The second joints 22 join the plurality of electric wires 10 adjacent along the stacking direction Z to each other. The stacked-electric-wire assembly 1 is thereby manufactured. In this case, for example, the plurality of electric wires 10 adjacent along the width direction Y is joined to each other by, for example, the bonding agent or thermal welding described above. The plurality of electric wires 10 adjacent along the stacking direction Z is also joined to each other by, for example, the bonding agent or thermal welding described above. Furthermore, in the electric-wire alignment step S1, the plurality of electric wires 10 is arranged in a matrix such that center portions C thereof overlap each other along the width direction Y and the stacking direction Z.

Next, in the electric-wire first separation step S2, as illustrated in FIG. 5, the plurality of electric wires 10 is separated along the stacking direction Z into a plurality of electric-wire layers 14 by tearing off the second joints 22 of the stacked-electric-wire assembly 1. In this case, for example, at the end 10a in the axial direction X of the stacked-electric-wire assembly 1, the plurality of second joints 22 provided in line along the width direction Y is torn off in a layered manner. Separation into three electric-wire layers 14 along the stacking direction Z is thereby performed. In the case, work of separation into the plurality of electric-wire layers 14 can be performed relatively easily by regions where the second joints 22 are not provided, that is, slits provided in line along the width direction Y. The second joints 22 can be provided at the end 10a in the axial direction X described above.

Next, in the electric-wire second separation step S3, as illustrated in FIG. 6, the first joints 21 of one of the electric-wire layers 14 obtained by the separation in the electric-wire first separation step S2 are torn off. The plurality of electric wires 10 aligned along the width direction Y, which constitute the electric-wire layer 14, is separated on the side of the end 10a in the axial direction X. In this case, for example, at the end 10a in the axial direction X of the electric-wire layer 14, the plurality of first joints 21 provided in line along the width direction Y is separately torn off. The plurality of electric wires 10 is separated from each other along the width direction Y.

In the case, in the embodiment, the plurality of electric wires 10 constituting the electric-wire layer 14 is configured such that the plurality of electric wires 10 has a tearing-off amount along the axial direction X of the first joints 21, which increases from the side of a central portion to the sides of both ends in the width direction Y. That is, slits are formed between the plurality of electric wires 10 constituting the electric-wire layer 14. The slits have lengths along the axial direction X, which increase from the side of the central portion to the sides of both the ends in the width direction Y. In the embodiment, a root portion 13 of the slits has a mountain shape in which the root portion 13 protrudes toward the side of the end 10a in the axial direction X and a vertex is provided at the central portion in the width direction Y. This enables the plurality of electric wires 10 constituting the electric-wire layer 14 to have a deformation amount increasing from the side of the central portion to the sides of both the ends in the width direction Y, and then enables the end 10a in the axial direction X of the plurality of electric wires 10 to be aligned along the width direction Y.

Next, in the electric-wire peeling step, as illustrated in FIG. 7, the conductor portions 11 are exposed by peeling off the insulating coatings 12 of the plurality of electric wires 10 separated in the electric-wire second separation step S3 at the end 10a in the axial direction X. For example, the electric-wire peeling step may be collectively performed on the insulating coatings 12 of the plurality of electric wires 10, or may be sequentially performed from the side of one end toward the side of the other end in the width direction Y.

Next, in the terminal attaching step S4, as illustrated in FIG. 8, the terminal 30 is attached to the end 10a in the axial direction X of the plurality of electric wires 10. The plurality of electric wires 10 has been separated in the electric-wire second separation step S3. The conductor portions 11 thereof have been exposed in the electric-wire peeling step. In this case, for example, the plurality of terminals 30 is crimped and fixed to the plurality of electric wires 10 provided in line along the width direction Y. For example, the terminal attaching step S4 may be collectively performed after setting the plurality of terminals 30 to the conductor portions 11 of the plurality of electric wires 10, or may be sequentially performed from the side of one end toward the side of the other end in the width direction Y.

Then, in the terminal accommodating step S5, as illustrated in FIG. 9, the plurality of terminals 30 attached in the terminal attaching step S4 is inserted into the cavities 42 of the connector 40. In this case, for example, the plurality of terminals 30 is collectively inserted into the plurality of cavities 42 provided in line along the width direction Y of the connector 40 with the plurality of terminals 30 being aligned along the width direction Y and integrally held by a jig or the like. In the plurality of steps as described above, the terminals 30 and the connectors 40 are installed to the plurality of electric wires 10 constituting the stacked-electric-wire assembly 1. The wire harness WH can thereby be manufactured.

Note that, in the embodiment, the stacked-electric-wire assembly 1 includes path regulating portions 15 and deformation permitting portions 16. The path regulating portions 15 are integrated with each other by the above-described joints 20. The deformation permitting portions 16 are separated from each other by tearing off the joints 20. The path regulating portions 15 cannot be relatively displaced mutually with another electric wire 10 to which at least some of the plurality of electric wires 10 constituting the stacked-electric-wire assembly 1 are adjacent. The path regulating portions 15 have rigidity relatively higher than that of the deformation permitting portions 16. The path regulating portions 15 typically function as parts that regulate an installation path of the plurality of electric wires 10 constituting the stacked-electric-wire assembly 1. The path regulating portions 15 have a shape in accordance with the installation path of the stacked-electric-wire assembly 1, so that the path regulating portions 15 have a high shape holding function.

In contrast, the deformation permitting portions 16 can be relatively displaced mutually with another electric wire 10 to which at least some of the plurality of electric wires 10 constituting the stacked-electric-wire assembly 1 are adjacent. The deformation permitting portions 16 have flexibility relatively higher than that of the path regulating portions 15. For example, the deformation permitting portions 16 function as parts that permit deformation along the width direction Y and the stacking direction Z of the plurality of electric wires 10. The deformation permitting portions 16 permit deformation of the plurality of electric wires 10 to the path regulating portions 15. The deformation permitting portions 16 can thereby improve workability of installing the terminals 30, the connectors 40, and the like. In other words, the deformation permitting portions 16 have a relatively high shape changing function.

As described above, in the wire harness WH of the embodiment, the plurality of electric wires 10 can be separated from each other by tearing off the joints 20. The terminals 30 are attached to the end 10a with at least one electric wire 10 being separated on the side of the end 10a in the axial direction X, and inserted into the cavities 42 of the connector 40. In the configuration, in the wire harness WH, for example, the plurality of electric wires 10 is originally integrated together by the joints 20. The terminals 30, the connectors 40, and the like can thus be installed to separated electric wires 10 without holding the plurality of electric wires 10 aligned along the width direction Y and the stacking direction Z with a holding member such as tape. As a result, the wire harness WH can improve the workability of installation work.

Furthermore, in the wire harness WH of the embodiment, the plurality of electric wires 10 is arranged in a matrix such that the center portions C thereof overlap each other along the width direction Y and the stacking direction Z. The configuration enables the wire harness WH to reduce the number of contacts between the plurality of electric wires 10 adjacent along the width direction Y and the stacking direction Z and make the electric wires 10 easily torn off from each other. The wire harness WH can then improve workability of installation work.

Furthermore, in the wire harness WH of the embodiment, the plurality of electric wires 10 can be separated into a plurality of electric-wire layers 14 along the stacking direction Z by tearing off the second joints 22 of the joints 20. The electric-wire layers 14 are configured such that the plurality of electric wires 10 aligned along the width direction Y, which constitute the electric-wire layers 14, can be separated from each other by tearing off the first joints 21 of the joints 20. The configuration enables the wire harness WH to improve workability of work of tearing off and separating the plurality of electric wires 10 aligned along the width direction Y and the stacking direction Z from each other.

Furthermore, in the wire harness WH of the embodiment, the plurality of electric wires 10 constituting the electric-wire layer 14 is configured such that the plurality of electric wires 10 has a tearing-off amount along the axial direction X of the first joints 21, which increases from the side of a central portion to the sides of both ends in the width direction Y. The configuration enables the wire harness WH to increase a deformation amount of the plurality of electric wires 10 from the side of the central portion to the sides of both the ends in the width direction Y, and then to align the end 10a in the axial direction X of the plurality of electric wires 10 along the width direction Y and enhance insertability to the connectors 40.

Furthermore, in the wire harness WH of the embodiment, the plurality of electric wires 10 includes the path regulating portions 15 and the deformation permitting portions 16. The path regulating portions 15 are integrated with each other by the joints 20. The deformation permitting portions 16 are separated from each other by tearing off the joints 20. The path regulating portions 15 have rigidity relatively higher than that of the deformation permitting portions 16. The path regulating portions 15 regulate an installation path of the plurality of electric wires 10. The deformation permitting portions 16 have flexibility relatively higher than that of the path regulating portions 15. The deformation permitting portions 16 permit deformation of the plurality of electric wires 10 to the path regulating portions 15. The configuration enables the wire harness WH to regulate an installation path of the plurality of electric wires 10 with the path regulating portions 15 without using an exterior material such as tape. The wire harness WH can then improve workability of work of installing the terminals 30, the connectors 40, and the like to the deformation permitting portions 16.

Furthermore, the method of manufacturing the wire harness WH of the embodiment includes the electric-wire first separation step S2, the electric-wire second separation step S3, the terminal attaching step S4, and the terminal accommodating step S5. In the configuration, in the method of manufacturing the wire harness WH, the plurality of electric wires 10 is originally integrated together by the joints 20. The terminals 30, the connectors 40, and the like can thus be installed to separated electric wires 10 without holding the plurality of electric wires 10 aligned along the width direction Y and the stacking direction Z with a holding member such as tape. As a result, the wire harness WH can improve the workability of installation work.

### First Variation

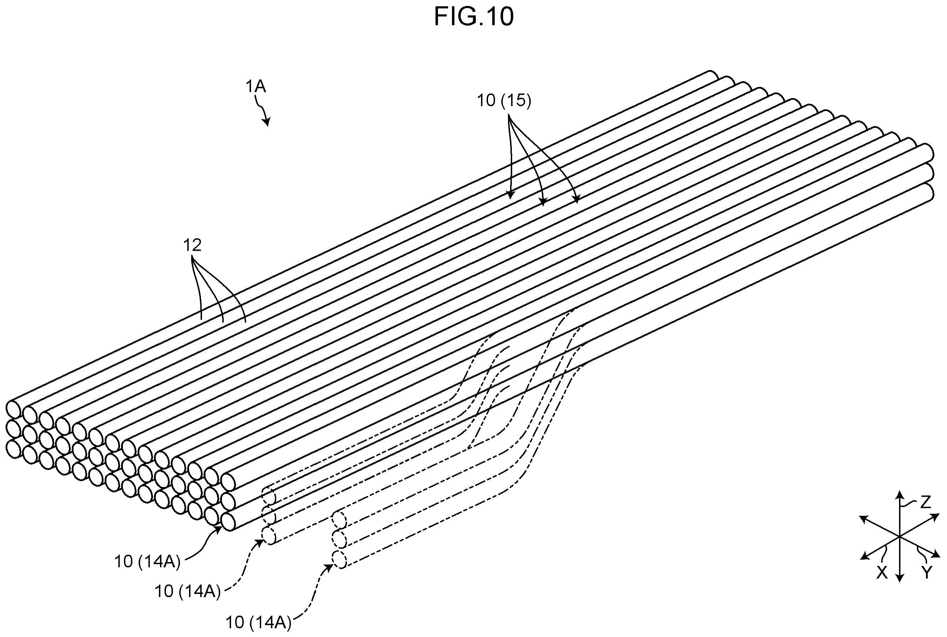

FIG. 10 is a perspective view of a stacked-electric-wire assembly 1A of a wire harness WH according to a first variation. The wire harness WH in FIG. 10 has a configuration similar to that of the wire harness WH of the above-described embodiment. Therefore, the wire harness WH can obtain functions and effects similar to those of the above-described embodiment based on the similar configuration.

Note, however, that the variation is different from the above-described embodiment in that the plurality of electric wires 10 can be separated into a plurality of electric-wire layers 14A along the width direction Y as illustrated in FIG. 10. That is, in the variation, separation into the plurality of electric-wire layers 14A is performed by tearing off the plurality of first joints 21 provided in line along the stacking direction Z in a layered manner in the above-described electric-wire first separation step S2. In the electric-wire layers 14A, in the electric-wire second separation step S3, the plurality of electric wires 10 aligned along the stacking direction Z constituting the electric-wire layers 14A is separated from each other by tearing off the second joints 22 of the joints 20.

Furthermore, in the variation, in the stacked-electric-wire assembly 1A, the insulating coatings 12 of the plurality of electric wires 10, the first joints 21, and the second joints 22 are integrated with each other. That is, in the variation, for example, the insulating coatings 12 of the plurality of electric wires 10, the first joints 21, and the second joints 22 are integrally molded by extruding, for example, an insulating resin material. In the variation, the first joints 21 are configured as resin coupling portions that join the plurality of electric wires 10 adjacent along the width direction Y to each other. The second joints 22 are configured as resin coupling portions that join the plurality of electric wires 10 adjacent along the stacking direction Z to each other. Note that, in the variation, for example, the insulating coatings 12 of the plurality of electric wires 10, the first joints 21, and the second joints 22 can be integrally molded by performing extrusion using, for example, a mold obtained by extending a mold used in a process of manufacturing a flat cable along the stacking direction Z.

As described above, in the stacked-electric-wire assembly 1A of the variation, the plurality of electric wires 10 can be separated into a plurality of electric-wire layers 14A along the width direction Y by tearing off the first joints 21 of the joints 20. The electric-wire layers 14A are configured such that the plurality of electric wires 10 aligned along the stacking direction Z, which constitute the electric-wire layers 14A, can be separated from each other by tearing off the second joints 22 of the joints 20. The configuration enables the stacked-electric-wire assembly 1A to improve workability of work of tearing off and separating the plurality of electric wires 10 aligned along the width direction Y and the stacking direction Z from each other.

Furthermore, in the stacked-electric-wire assembly 1A of the variation, the insulating coatings 12 of the plurality of electric wires 10, the first joints 21, and the second joints 22 are integrated with each other. The configuration enables the stacked-electric-wire assembly 1A to constitute the first joints 21 and the second joints 22 relatively easily with the coupling portions between the insulating coatings 12. Furthermore, for example, workability of work of separating the plurality of electric wires 10 along the width direction Y and the stacking direction Z can be improved by providing slit-shaped cut portions to the end 10a in the axial direction X in the first joints 21 and the second joints 22.

### Second Variation

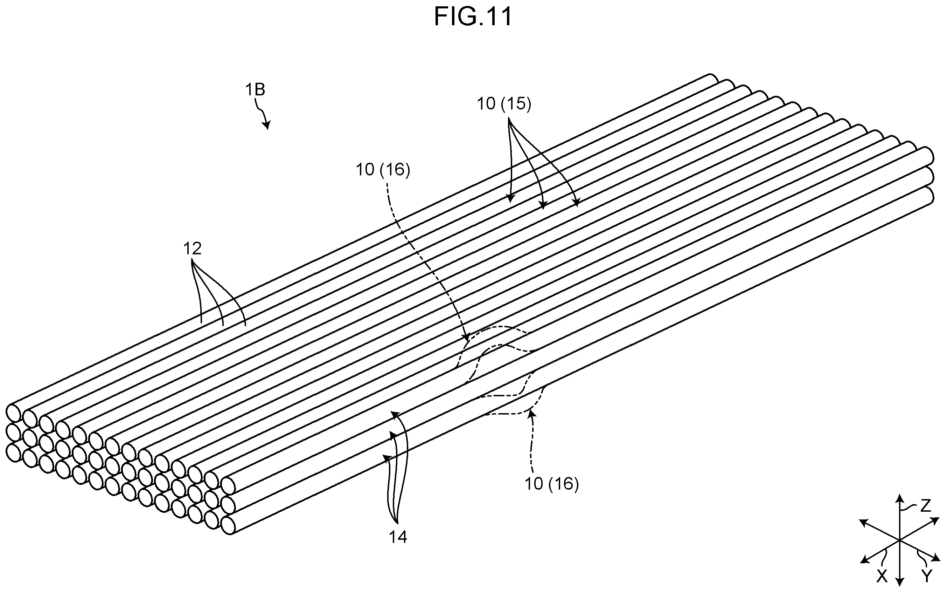

FIG. 11 is a perspective view of a stacked-electric-wire assembly 1B of a wire harness WH according to a second variation. The wire harness WH in FIG. 11 has a configuration similar to that of the wire harness WH of the above-described embodiment. Therefore, the wire harness WH can obtain functions and effects similar to those of the above-described embodiment based on the similar configuration.

Note, however, that the variation is different from the above-described embodiment in that the plurality of electric wires 10 is partially separated in a central portion in the axial direction X of the stacked-electric-wire assembly 1B as illustrated in FIG. 11. That is, in the variation, the deformation permitting portions 16 that can be deformed to the path regulating portions 15 are partially provided in the central portion in the axial direction X of the stacked-electric-wire assembly 1B. In the variation, for example, in the central portion in the axial direction X of the stacked-electric-wire assembly 1B, other wiring members can be joined (connected) to the conductor portions 11 by peeling off the insulating coatings 12 of the deformation permitting portions 16 and exposing the conductor portions 11. Note that, although the deformation permitting portions 16 are provided only on the side of the end in the width direction Y of the stacked-electric-wire assembly 1B for convenience in FIG. 11, a plurality of deformation permitting portions 16 may be provided over the range between one end and the other end in the width direction Y.

Furthermore, in the variation, for example, the stacked-electric-wire assembly 1B is formed by stacking the plurality of electric-wire layers 14 formed by flat cables along the stacking direction Z. That is, in the variation, in each of the electric-wire layers 14 of the stacked-electric-wire assembly 1B, the insulating coatings 12 of the plurality of electric wires 10 and the first joints 21 are integrally molded. Therefore, in the variation, the first joints 21 are configured as resin coupling portions that join the plurality of electric wires 10 adjacent along the width direction Y to each other. In contrast, in the variation, the second joints 22 include, for example, a bonding portion or a welding portion. The bonding portion bonds insulating coatings 12 of a plurality of electric wires 10 constituting each of the electric-wire layers 14 to each other with a bonding material. The welding portion joins insulating coatings 12 of a plurality of electric wires 10 constituting each of the electric-wire layers 14 to each other by thermal welding.

As described above, in the stacked-electric-wire assembly 1B of the variation, the plurality of electric wires 10 is formed by stacking the plurality of electric-wire layers 14 formed by flat cables along the stacking direction Z. The configuration enables the stacked-electric-wire assembly 1B to constitute the stacked-electric-wire assembly 1B relatively easily with the plurality of electric-wire layers 14 formed by flat cables, for example. Furthermore, for example, workability of work of tearing off and separating the second joints 22 of the joints 20 into the plurality of electric-wire layers 14 along the stacking direction Z can be improved.

### Third Variation

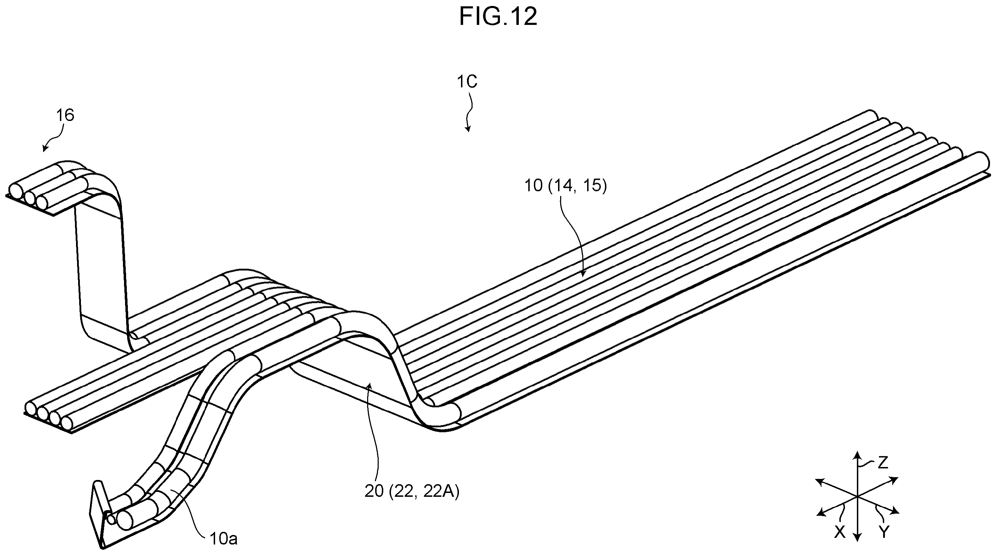

FIG. 12 is a perspective view of a stacked-electric-wire assembly 1C of a wire harness WH according to a third variation. The wire harness WH in FIG. 12 has a configuration similar to that of the wire harness WH of the above-described embodiment. Therefore, the wire harness WH can obtain functions and effects similar to those of the above-described embodiment based on the similar configuration.

Note, however, that the variation is different from the above-described embodiment in that the second joints 22 include a sheet 22A interposed between the plurality of electric-wire layers 14 as illustrated in FIG. 12. The sheet 22A is, for example, a thin-plate-shaped bendable non-adhesive sheet extending along the electric-wire layers 14. In the variation, for example, one of the plurality of electric-wire layers 14 is joined via a bonding material, double-sided tape, and the like applied to the front surface of the sheet 22A. The other of the plurality of electric-wire layers 14 is joined via a bonding agent, double-sided tape, and the like applied to the back surface of the sheet 22A. That is, in the variation, the plurality of electric-wire layers 14 adjacent along the stacking direction Z is joined to each other via the sheet 22A.

Note that the sheet 22A is not limited to that in this example. For example, the sheet 22A may be an adhesive sheet. For example, the sheet 22A can serve as the first joints 21 by fixing the plurality of electric wires 10 constituting the electric-wire layers 14. That is, in the variation, the sheet 22A can inhibit relative movements of the plurality of electric wires 10 adjacent along the width direction Y even when the first joints 21 including the bonding portion, the welding portion, and the like described above are not provided between the plurality of electric wires 10 adjacent along the width direction Y. Furthermore, when the first joints 21 including the bonding portion, the welding portion, and the like described above are not provided, workability of work of separating the plurality of electric wires 10 constituting the electric-wire layers 14 along the width direction Y is improved.

As described above, in the stacked-electric-wire assembly 1C of the variation, the second joints 22 include the sheet 22A interposed between the plurality of electric-wire layers 14. The plurality of electric-wire layers 14 is joined to each other via the sheet 22A. The configuration enables the stacked-electric-wire assembly 1C to improve workability of work of tearing off and separating the sheet 22A into the plurality of electric-wire layers 14 along the stacking direction Z with the sheet 22A of the second joints 22. Furthermore, for example, the sheet 22A can serve as the first joints 21 that joins the plurality of electric wires 10 adjacent along the width direction Y to each other.

Although the embodiment and the modification of the present invention have been exemplified above, the embodiment and the modification are merely examples, and are not intended to limit the scope of the invention. The above-described embodiment and modification can be implemented in various other forms, and various omissions, substitutions, combinations, and changes can be made without departing from the gist of the invention. In addition, specifications (structure, type, direction, form, size, length, width, thickness, height, number, arrangement, position, material, and the like) of each configuration, shape, and the like can be appropriately changed and implemented.

The wire harness and the method of manufacturing the wire harness according to the present embodiment have an effect of improving workability of installation work.

## Claims

1. A wire harness (WH) comprising:
a plurality of electric wires (10) each extending along an axial direction (X), aligned along a width direction (Y) intersecting with the axial direction (X), and aligned in a multi-layered manner along a stacking direction (Z) intersecting with the axial direction (X) and the width direction (Y);
a joint (20) including: a first joint (21) that joins a plurality of electric wires (10) adjacent along the width direction (Y) to each other; and a second joint (22) that joins a plurality of electric wires (10) adjacent along the stacking direction (Z) to each other;
a terminal (30) provided at an end (10a) in the axial direction (X) of at least one of the plurality of electric wires (10); and
a connector (40) including a cavity (42) that accommodates and holds the terminal (30), wherein
the plurality of electric wires (10) is allowed to be separated from each other by tearing off the joint (20), and the terminal (30) is attached to the end (10a) and inserted into the cavity (42) of the connector (40) with at least one of the plurality of electric wires (10) being separated on a side of the end (10a) in the axial direction (X).

2. The wire harness (WH) according to claim 1,
wherein the plurality of electric wires (10) is arranged in a matrix such that center portions (C) of the plurality of electric wires (10) overlap each other along the width direction (Y) and the stacking direction (Z).

3. The wire harness (WH) according to claim 1 or 2,
wherein the plurality of electric wires (10) is allowed to be separated into a plurality of electric-wire layers (14) along the stacking direction (Z) by tearing off the second joint (22) of the joint (20), and
the electric-wire layers (14) are configured such that the plurality of electric wires (10) aligned along the width direction (Y), which constitute the electric-wire layers (14), is allowed to be separated from each other by tearing off the first joint (21) of the joint (20).

4. The wire harness (WH) according to claim 1 or 2,
wherein the plurality of electric wires (10) is allowed to be separated into a plurality of electric-wire layers (14A) along the width direction (Y) by tearing off the first joint (21) of the joint (20), and
the electric-wire layers (14A) are configured such that the plurality of electric wires (10) aligned along the stacking direction (Z), which constitute the electric-wire layers (14), is allowed to be separated from each other by tearing off the second joint (22) of the joint (20).

5. The wire harness (WH) according to claim 3,
wherein the plurality of electric wires (10) constituting the electric-wire layers (14) has a tearing-off amount along the axial direction (X) of the first joint (21), which increases from a side of a central portion to sides of both ends in the width direction (Y).

6. The wire harness (WH) according to claim 1 or 2,
wherein the plurality of electric wires (10) includes: a path regulating portion (15) integrated with each other by the joint (20); and a deformation permitting portion (16) separated by tearing off the joint (20),
the path regulating portion (15) has rigidity relatively higher than rigidity of the deformation permitting portion (16), and regulates an installation path of the plurality of electric wires (10), and
the deformation permitting portion (16) has flexibility relatively higher than flexibility of the path regulating portion (15), and permits deformation of the plurality of electric wires (10) to the path regulating portion (15).

7. A method of manufacturing a wire harness (WH), comprising:
an electric-wire first separation step (S2) of separating a plurality of electric wires (10) along a stacking direction (Z) into a plurality of electric-wire layers (14) by tearing off a second joint (22), performed on the plurality of electric wires (10) in a state in which the plurality of electric wires (10) each extending along an axial direction (X) is aligned along a width direction (Y) intersecting with the axial direction (X) and aligned in a multi-layered manner along the stacking direction (Z) intersecting with the axial direction (X) and the width direction (Y), a first joint (21) joins a plurality of electric wires (10) adjacent along the width direction (Y) to each other, and a second joint (22) joins a plurality of electric wires (10) adjacent along the stacking direction (Z) to each other;
an electric-wire second separation step (S3) of separating, on a side of an end (10a) in the axial direction (X), at least one of the plurality of electric wires (10) aligned along the width direction (Y), which constitute the electric-wire layers (14), by tearing off the first joint (21) of the electric-wire layers (14) obtained by separation in the electric-wire first separation step (S2);
a terminal attaching step (S4) of attaching a terminal (30) to the end (10a) in the axial direction (X) of at least one of the plurality of electric wires (10) separated in the electric-wire second separation step (S3); and
a terminal accommodating step (S5) of inserting the terminal (30) attached in the terminal (30) attaching step into a cavity (42) of a connector (40).
